# FASCICULE DE BREVET EUROPEEN

(11) **EP 2 092 634 B1**
(45) Date de publication et mention de la délivrance du brevet: **09.08.2017**
(21) Numéro de dépôt: 07820247.0
(22) Date de dépôt: 17.09.2007
(51) Int. Cl.: H02P 27/04

(54) **DISPOSITIF ET PROCÈDE D'ALIMENTATION ÉLECTRIQUE D'AU MOINS UNE MACHINE A INDUCTION A BORD D'UN AÉRONEF**
VERFAHREN UND EINRICHTUNG ZUR ELEKTRISCHEN VERSORGUNG MINDESTENS EINER INDUKTIONSMASCHINE AN BORD EINES FLUGZEUGS MIT STROM
METHOD AND DEVICE FOR ELECTRICALLY POWERING AT LEAST ONE INDUCTION MACHINE ON BOARD AN AIRCRAFT

(30) Priorité: 17.10.2006 FR 0654318
(43) Date de publication de la demande: 26.08.2009
(73) Titulaire: AIRBUS OPERATIONS, 31060 Toulouse (FR)
(72) Inventeur: LANDO, Jean-Louis, 09700 Saverdun (FR)
(74) Mandataire: Ilgart, Jean-Christophe
(86) Numéro de dépôt international: PCT/EP2007/059773
(87) Numéro de publication internationale: WO 2008/046701

(56) Documents cités:
- EP-A1- 0 117 881
- DE-A1- 3 046 164
- DE-A1- 3 324 687
- JP-A- 61 098 191

## Description

### DOMAINE TECHNIQUE

L'invention concerne un dispositif et un procédé d'alimentation électrique d'au moins une machine à induction à bord d'un aéronef.

Dans la suite, pour des raisons de simplification de la description, on considère, à titre d'exemple, un aéronef de type avion.

### ÉTAT DE LA TECHNIQUE ANTÉRIEURE

Une machine à induction (moteur asynchrone) est un actionneur électromécanique largement utilisé dans le domaine aéronautique. Une telle machine présente, en effet, de nombreux avantages du fait de son principe simple de fonctionnement, de sa robustesse et de sa simplicité de fabrication.

Les architectures systèmes des avions utilisent largement le moteur asynchrone triphasé dans des applications nécessitant l'entraînement de charges mécaniques telles que des pompes hydrauliques, des pompes carburant ou des ventilateurs.

Dans un premier temps, l'alimentation des machines à induction par des barres de distribution électriques ne posait pas de problème particulier car la tension et la fréquence d'alimentation étaient toutes deux maintenues constantes (115 volts alternatifs, 400 Hz). Avec une demande toujours croissante de disponibilité des systèmes avion, les réseaux électriques de bord se transforment peu à peu en réseaux à fréquence variable (360Hz-800Hz), ce qui permet de simplifier et de fiabiliser les systèmes de génération d'énergie électrique.

Mais, lorsqu'on augmente la fréquence d'alimentation d'une machine à induction sur une large plage de fréquences tout en maintenant la tension constante, le flux maximal dans l'entrefer décroît et donc le couple mécanique maximal fourni par la machine diminue dans des proportions très importantes pour les hautes fréquences : le couple maximal décroît avec le carré de la fréquence. L'alimentation « directe » d'une telle machine par un réseau à fréquence variable entraîne donc une augmentation de masse, ainsi qu'une dégradation du rendement, qui ne sont pas envisageables.

Une solution envisageable pour résoudre un tel problème technique consiste à ajouter un convertisseur statique (électronique de puissance) entre la barre de distribution de fréquence variable et la machine à induction afin de recréer une tension et une fréquence fixe par transformation de l'énergie électrique. Une telle solution présente l'avantage de permettre de continuer à utiliser les machines à induction dans les avions utilisant des réseaux de bord à fréquence variable. Cependant, cette solution nécessite d'adjoindre un convertisseur statique à deux étages de transformation (redresseur + onduleur) à la machine à induction, ce qui réduit d'un ordre de grandeur la fiabilité de l'ensemble.

La présente invention a pour objet de résoudre un tel problème technique en proposant un dispositif et un procédé d'alimentation électrique d'au moins une machine à induction à bord d'un aéronef, qui soit une solution à la fois simple et fiable, sans augmentation de masse et sans électronique de puissance.

Trois demandes de brevet de l'art connu sont analysées ci-dessous.

La demande de brevet DE 3046164 A1 décrit un système de contrôle de la variation de vitesse d'un moteur asynchrone directement couplé à un générateur, dans lequel on change la vitesse du générateur tout en maintenant constant le rapport tension-fréquence.

La demande de brevet EP-A1- 0117881 décrit un système de propulsion de navire qui est entraîné à partir d'une machine principale, de préférence un moteur Diesel ou une turbine à gaz ou à vapeur, et se compose d'une hélice principale et une hélice tandem. Une partie de la puissance mécanique totale est reprise par un générateur synchrone disposé sur la face avant de la machine principale ou dans la ligne d'arbre et réalisée par l'intermédiaire d'un moteur à courant alternatif polyphasé qui entraine l'hélice tandem.

La demande de brevet DE 33 24 687 A1 décrit un moteur asynchrone à deux cages.

### EXPOSÉ DE L'INVENTION

Les caractéristiques de l'invention sont plus particulièrement mises en évidence dans les revendications 1 et 6 ci-après.

L'invention concerne un dispositif d'alimentation électrique d'au moins une machine à induction à bord d'un aéronef, par exemple un avion, dans lequel une barre de distribution électrique de fréquence variable alimente la au moins une machine à induction, caractérisé en ce qu'il comprend au moins une source de type CVFR, dans laquelle la tension et la fréquence sont toutes deux variables mais dans un rapport constant, qui alimente cette au moins une machine à induction, la au moins machine à induction étant un moteur asynchrone à au moins deux cages, ou un moteur asynchrone à encoches profondes.

Dans un premier mode de réalisation, le dispositif de l'invention comprend un alternateur à aimants permanents.

Dans un second mode de réalisation, le dispositif de l'invention comprend un alternateur de type VFG contrôlé par un générateur de contrôle.

Dans un troisième mode de réalisation, le dispositif de l'invention comprend un régulateur à induction et une boucle de régulation de position angulaire, qui comprend avantageusement un diviseur, un comparateur à une valeur référence, un onduleur de faible puissance et un actionneur de positionnement angulaire.

L'invention concerne également un procédé d'alimentation électrique d'au moins une machine à induction à bord d'un aéronef, par exemple un avion, dans lequel une barre de distribution électrique de fréquence variable alimente la au moins une machine à induction, caractérisé en ce qu'on alimente cette au moins une machine à induction avec au moins une source de type CVFR, dans laquelle la tension et la fréquence sont toutes deux variables mais dans un rapport constant, et en ce que la au moins une machine à induction est un moteur asynchrone à au moins une cage ou un moteur asynchrone à encoches profondes.

Dans un premier mode de réalisation, on utilise un alternateur à aimants permanents pour réaliser une source de type CVFR.

Dans un second mode de réalisation, on utilise un générateur de type VFG pour réaliser une source de type CVFR.

Dans un troisième mode de réalisation, on utilise un régulateur à induction alimenté par un réseau de tension fixe et de fréquence variable, et dont on asservit la position quasi-statique du rotor au rapport de la tension à la fréquence.

### BRÈVE DESCRIPTION DES DESSINS

La figure 1 illustre une alimentation à tension constante et fréquence variable d'une machine à induction.
La figure 2 illustre une alimentation de type CVFR d'une machine à induction, selon l'invention.
Les figures 3A à 3C illustrent une alimentation de type CVFR avec un moteur à double cage.
La figure 4 illustre un premier mode de réalisation du dispositif de l'invention.
La figure 5 illustre un second mode de réalisation du dispositif de l'invention.
Les figures 6A et 6B illustrent un troisième mode de réalisation du dispositif de l'invention.

### EXPOSÉ DÉTAILLÉ DE MODES DE RÉALISATION PARTICULIERS

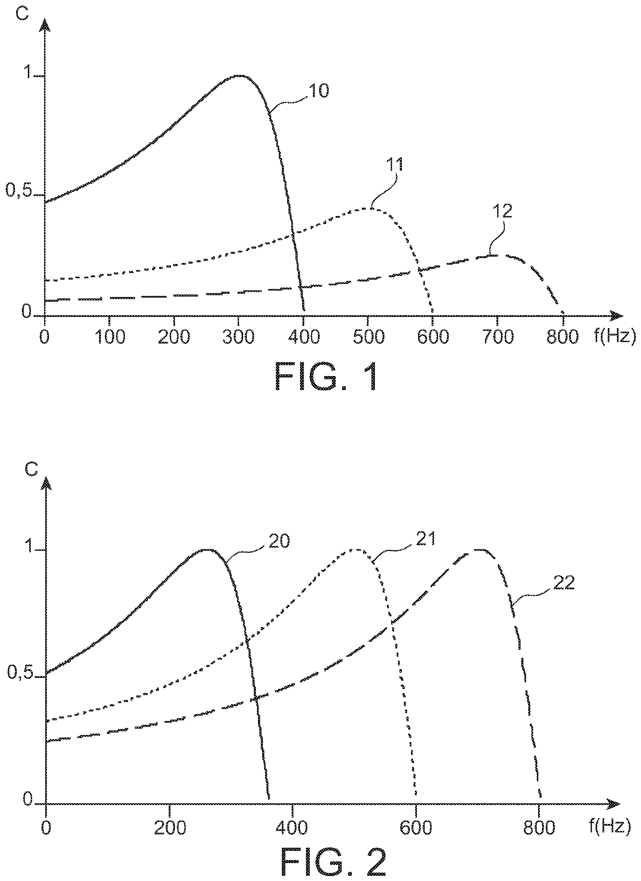

La figure 1 illustre une alimentation à tension constante et fréquence variable d'une machine à induction. Cette figure représente la variation en fonction de la tension V et de la fréquence f du couple maximal d'une machine à induction, qui est un actionneur à flux forcé par la tension et la fréquence d'alimentation. Ce couple C tel que : C = k(V/f)². Les courbes de la figure 1 illustrent ainsi l'évolution du couple électromagnétique d'une machine à induction lorsque la tension est maintenue constante à 115 volts et lorsque la fréquence varie de 400 Hz à 800 Hz, la courbe 10 correspondant à un couple de 400 Hz, la courbe 11 correspondant à un couple à 600 Hz et la courbe 12 correspondant à un couple à 800 Hz. Le couple maximal à 800 Hz est le quart du couple à 400 Hz ; ce qui démontre qu'un tel mode d'alimentation n'est pas souhaitable.

Le dispositif de l'invention consiste à utiliser une machine à induction alimentée par une source de type CVFR (« constant voltage-to-frequency ratio ») où la tension et la fréquence varient, mais dans un rapport maintenu constant. La courbe de la figure 2 illustre l'évolution du couple électromagnétique d'une telle machine : la courbe 20 correspondant à un couple à 115 volts et 400 Hz, la courbe 21 correspondant à un couple à 172,5 volts et 600 Hz et la courbe 22 correspondant à un couple à 230 volts et 800 Hz. Le couple maximal est inchangé sur toute la plage de variation de la fréquence. Néanmoins, le couple de démarrage décroît, ce qui peut poser certains problèmes de démarrage à pleine charge.

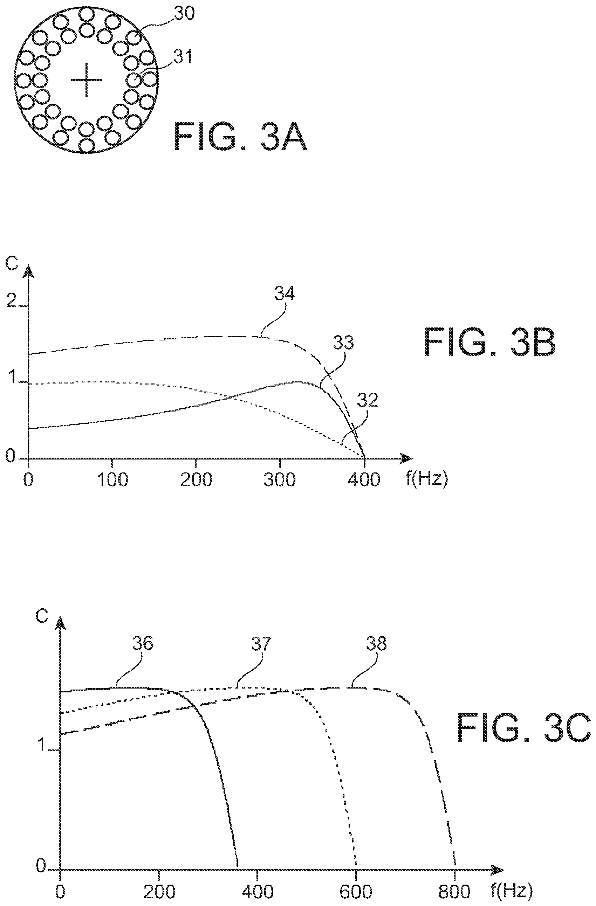

La figure 3A illustre le détail de constitution d'un rotor de moteur asynchrone dit « à double cage ». Dans ce cas, le moteur est muni d'un rotor constitué de deux cages concentriques 30 et 31, la cage extérieure 30 présentant une forte résistance et une faible inductance ; la cage intérieure 31 présentant une faible résistance et une forte inductance.

La figure 3B illustre les couples C produits par les deux différentes cages, la courbe 32 correspondant à la cage extérieure, la courbe 33 correspondant à la cage intérieure, la courbe 34 correspondant au couple total.

Au démarrage et aux basses vitesses de rotation (le glissement est proche de 1), la variation du champ est telle que, à cause de l'effet de peau, le champ ne pénètre quasiment pas dans le rotor et seule la cage extérieure 30 (de faible inductance et de forte résistance) a une influence. Aux fortes vitesses de rotation (le glissement est voisin de 0), le champ tourne lentement par rapport au rotor et il pénètre profondément dans celui-ci. A ce moment là, la cage intérieure 31 (de faible résistance et forte inductance) exerce son influence tandis que la cage extérieure 30 présente une impédance trop élevée pour que des courants importants s'y développent. Celle-ci perd donc de son influence. Aux vitesses de rotation intermédiaires, la cage intérieure 31 et la cage extérieure 30 contribuent à la création de couple. Dans tous les cas, le couple du moteur est donné par la somme instantanée des couples produits par les cages intérieure et extérieure 31 et 30.

Les courbes de la figure 3C, illustrent le comportement en fréquence d'un moteur à double cage alimenté par une source de type CVFR, conformément à l'invention, la courbe 36 correspondant à un couple à 115 volts, 400 Hz, la courbe 37 correspondant à un couple à 172,5 volts, 600 Hz et la courbe 38 correspondant à un couple à 330 volts, 800 Hz. Un tel dispositif permet également d'améliorer considérablement les couples de démarrage sur toute la plage de fréquence, pour un démarrage possible à pleine charge sur toute la plage de fréquences. Ceci est également vrai dans le cas d'une utilisation de moteurs dits « à triple cage » ou « à encoches profondes ».

Le dispositif de l'invention consiste donc à alimenter une machine à induction par une source électrique de type CVFR (« constant voltage-to-frequency ratio ») où la tension et la fréquence sont toutes deux variables mais dans un rapport constant ou quasi-constant, le flux maximal de la machine dans l'entrefer étant maintenu constant, le couple électromagnétique maximal, par voie de conséquence restant inchangé.

La vitesse de la machine est variable et elle est directement fonction de la fréquence d'alimentation et de la charge mécanique entraînée, ce qui est tout à fait acceptable si le système mécanique entraîné (électropompe hydraulique ou fuel) s'accommode d'une vitesse variable (adjonction d'un plateau à inclinaison variable sur la pompe, débit autorégulé).

Le couple de démarrage de la machine est plus faible aux fréquences élevées par rapport aux faibles fréquences. Mais l'utilisation d'un moteur asynchrone ayant un rotor de type «double cage», « triple cage » ou «encoches profondes» permet d'assurer un démarrage en pleine charge, l'utilisation d'une telle technologie de type cage permettant au moteur de réduire son courant d'appel au démarrage au détriment de quelques points de rendement. Si le système entraîné est une pompe à plateau inclinable (pompe à débit ajustable), la position initiale du plateau peut être telle que le couple résistant est minimal au démarrage (débit nul pour la pompe).

On va, à présent, considérer plusieurs modes de réalisation avantageux du dispositif de l'invention.

### 1. Premier mode de réalisation utilisation d'un alternateur à aimants permanents

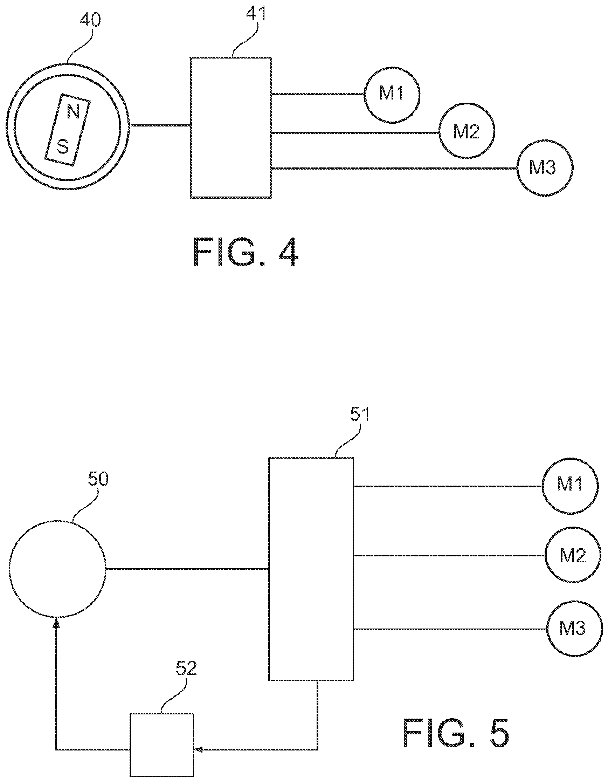

Ce premier mode de réalisation est une solution simple, robuste et avantageux. Pour réaliser une source de type CVFR, on utilise un alternateur à aimants permanents 40 dit PMA (ou « Permanent Magnet Alternator »). Comme représenté sur la figure 4, cet alternateur 40 alimente, par exemple, trois machines à induction M1, M2 et M3, via une barre bus CVFR 41. En effet, un tel alternateur 40 produit « naturellement » une tension CFVR grâce au fait que la force électromotrice E (FEM) produite par les aimants permanents en mouvement est directement proportionnelle à la fréquence de rotation f de son arbre mécanique (E=k.f). Si un tel alternateur est dimensionné de telle sorte que la réaction d'induit soit faible, la tension de sortie varie peu en fonction de la charge et on peut considérer que la tension est quasi-constante à une fréquence donnée.

De plus, un tel alternateur à aimants permanents 40 présente l'avantage d'être peu sensible à la foudre dans la mesure où il ne nécessite pas de calculateurs pour contrôler son excitation.

### 2. Second mode de réalisation utilisation d'un générateur VFG

Dans le second mode de réalisation, illustré sur la figure 5, on utilise un générateur 50 de type VFG (ou « Variable Frequency Generator ») qui alimente une barre bus CVFR 51 et que l'on contrôle à l'aide d'un générateur GCU 52 (ou « Generator Control Unit ») dans un mode de fonctionnement particulier : le mode CVFR. En effet, au lieu de maintenir la tension constante au point de régulation POR (ou « Point Of Régulation ») quand la fréquence ou la charge change, on associe une loi V/f= k (constante) au courant d'excitation de telle sorte que la tension V au point POR devienne proportionnelle à la fréquence f mesurée par un générateur GCU 52. On asservit, ainsi, la valeur maximum de la tension de sortie à la fréquence f produite par action sur le courant d'excitation de l'alternateur. Cette solution présente l'avantage de compenser les variations de tension dues à la réaction d'induit du générateur 50 lorsque le courant de charge varie. En d'autres termes, on est sûr de pouvoir maintenir le ratio V/f constant.

### 3. Troisième mode de réalisation utilisation d'un régulateur d'induction

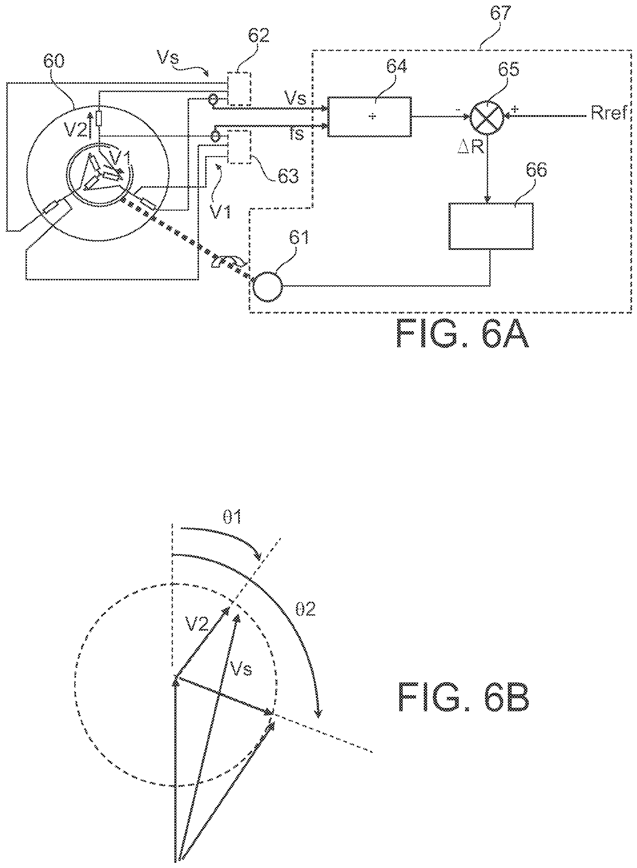

Le troisième mode de réalisation, illustré par la figure 6A, consiste à intercaler un convertisseur 60 de type « régulateur d'induction » (transformateur à champ tournant) entre la barre de distribution et la machine à induction.

Ce convertisseur 60 est alimenté par une tension constante et une fréquence variable, son rapport de transformation étant asservi au régime moteur par un actionneur 61 (moteur) de très faible puissance.

Ce mode de réalisation permet de pouvoir ne pas être tenu de dédier un générateur aux alimentations de type CVFR. Il permet d'utiliser le générateur principal de l'avion pour continuer à alimenter les charges conventionnelles à tension fixe et à fréquence variable.

Le convertisseur 60 permet de créer une barre de distribution 63 dédiée aux charges V/f=constante (CVFR) indépendamment du reste du réseau avion.

Ce mode de réalisation utilise une structure électromécanique proche d'un convertisseur asynchrone à rotor bobiné, mais dont le rotor serait quasi-statique. La position de ce rotor est fixe pour une fréquence d'alimentation donnée mais elle peut être modifiée lorsque la fréquence d'alimentation du système change. La tension V1 correspond à la tension d'alimentation constante du primaire reçue de la barre de distribution 63. La tension V2 correspond à la tension auto-induite par le convertisseur 60 à travers son enroulement secondaire. La tension de sortie Vs, comme illustré sur la figure 6B, est la somme vectorielle des tensions V1 et V2 qui va servir à alimenter la machine à induction 62. A une fréquence donnée et une charge donnée correspond une position angulaire θ. Cet angle θ peut être ajusté de manière faire varier la combinaison vectorielle de V1 et V2 de façon à garder un rapport Vs / f = (V1 + V2) / f = constante (CVFR) grâce à la boucle d'asservissement de position angulaire 67, illustrée sur la figure 6. Cette boucle 67 comprend un diviseur 64 permettant de calculer le rapport Vs/f, un comparateur 65 à un rapport de référence Rref, par exemple 115/400 =0,288, et qui délivre une différence de rapport ΔR à un onduleur de faible puissance 66 commandant l'actionneur de positionnement angulaire 61.

De tels modes de réalisation permettent de faire fonctionner une machine à induction sans électronique de puissance grâce à des solutions simples et très robustes ne dégradant pas la bonne fiabilité intrinsèque de la machine à induction.

## Revendications

1. Dispositif d'alimentation électrique d'au moins une machine à induction (M1, M2, M3 ; 62) à bord d'un aéronef, dans lequel une barre de distribution électrique de fréquence variable alimente la au moins une machine à induction, comprenant
- au moins une source de type CVFR (40 ; 50 ; 60), dans laquelle la tension et la fréquence sont toutes deux variables mais dans un rapport constant, caractérisé en ne que ladite source alimente cette au moins une machine à induction, la au moins une machine à induction étant un moteur asynchrone à au moins deux cages, ou un moteur asynchrone à encoches profondes et comprend
- un régulateur à induction (60) alimenté par un réseau de tension fixe et de fréquence variable et une boucle de régulation de position angulaire (67) gardant la tension et la fréquence dans un rapport constant.

2. Dispositif selon la revendication 1, dans lequel la boucle de régulation de position angulaire (67) comprend un diviseur (64), un comparateur (65) à une valeur référence (Rref), un onduleur de faible puissance (66) et un actionneur de positionnement angulaire (61).

3. Dispositif selon l'une quelconque des revendications précédentes, dans lequel l'aéronef est un avion.

4. Procédé d'alimentation électrique d'au moins une machine d'induction à bord d'un aéronef, dans lequel une barre de distribution électrique de fréquence variable alimente la au moins une machine à induction, comprenant
une alimentation de cette au moins une machine à induction avec au moins une source de type CVFR, dans laquelle la tension et la fréquence sont toutes deux variables mais dans un rapport constant, **caractérisé en ce que** la au moins une machine à induction est un moteur asynchrone à au moins deux cages ou un moteur asynchrone à encoches profondes, et **en ce qu'**
on utilise un régulateur à induction (60) alimenté par un réseau de tension fixe et de fréquence variable, et dont on asservit la position quasi-statique du rotor au rapport de la tension à la fréquence.

5. Aéronef comportant un dispositif selon l'une quelconque des revendications 1 à 3.

6. Aéronef comportant un dispositif susceptible de mettre en oeuvre le procédé selon la revendication 4.

## Patentansprüche

1. Vorrichtung zur Stromversorgung mindestens einer Induktionsmaschine (M1, M2, M3; 62) an Bord eines Luftfahrzeugs, wobei eine elektrische Sammelschiene mit variabler Frequenz mindestens eine Induktionsmaschine versorgt, die mindestens eine Quelle von der Art CVFR (40; 50, 60) enthält, wobei die Spannung und die Frequenz beide variabel aber in konstantem Verhältnis sind,
**dadurch gekennzeichnet, dass** die Quelle die mindestens eine Induktionsmaschine versorgt, wobei die mindestens eine Induktionsmaschine ein Asynchronmotor mit mindestens zwei Käfigen oder ein Asynchronmotor mit tiefen Nuten ist und enthält
- einen Induktionsregler (60), der von einem Netz mit Festspannung und variabler Frequenz versorgt wird, und eine Winkelstellung-Regelschleife (67), die die Spannung und die Frequenz in einem konstanten Verhältnis hält.

2. Vorrichtung nach Anspruch 1, wobei die Winkelstellung-Regelschleife (67) einen Divisor (64), einen Komparator (65) mit einem Bezugswert (Rref), einen Wechselrichter geringer Leistung (66) und ein Betätigungsglied der Winkelpositionierung (61) enthält.

3. Vorrichtung nach einem der vorhergehenden Ansprüche, wobei das Luftfahrzeug ein Flugzeug ist.

4. Verfahren zur Stromversorgung mindestens einer Induktionsmaschine an Bord eines Luftfahrzeugs, wobei eine elektrische Sammelschiene mit variabler Frequenz mindestens eine Induktionsmaschine versorgt, die mindestens eine Versorgung dieser mindestens einen Induktionsmaschine mit mindestens einer Quelle von der Art CVFR enthält, wobei die Spannung und die Frequenz beide variabel aber in konstantem Verhältnis sind, **dadurch gekennzeichnet, dass** die mindestens eine Induktionsmaschine Asynchronmotor mit mindestens zwei Käfigen oder ein Asynchronmotor mit tiefen Nuten ist, und dass ein Induktionsregler (60) verwendet wird, der von einem Netz mit Festspannung und variabler Frequenz versorgt wird, und bei dem die praktisch statische Stellung des Rotors dem Verhältnis der Spannung zur Frequenz nachgeführt wird.

5. Luftfahrzeug, das eine Vorrichtung nach einem der Ansprüche 1 bis 3 aufweist.

6. Luftfahrzeug, das eine Vorrichtung aufweist, die das Verfahren des Anspruchs 4 anwenden kann.

## Claims

1. Device for supplying electrical power to at least one induction machine (M1, M2, M3; 62) on board an aircraft, in which a variable frequency electrical distribution bar supplies the at least one induction machine, comprising
- at least one CVFR type source (40 ; 50 ; 60), in which the voltage and frequency are both variable but in a constant ratio, **characterised in that** said source supplies power to said at least one induction machine, the at least one induction machine being an asynchronous motor with at least two cages, or an asynchronous motor with deep slots, and comprising
- an induction regulator (60) powered by a network with fixed voltage and variable frequency and an angular position regulation loop (67) keeping the voltage and freqency in a constant ratio.

2. Device according to claim 1, in which the angular position regulation loop (67) comprises a divider (64), a means (65) of comparing with a reference value (Rref), a low power inverter (66) and an angular positioning actuator (61).

3. Device according to any one of the previous claims, in which the aircraft is an airplane.

4. Method for supplying electrical power to at least one induction machine on board an aircraft, in which a variable frequency electrical distribution bar supplies the at least one induction machine, comprising supplyng power to said at least one induction machine with at least one CVFR type source in which the voltage and frequency are both variable but in a constant ratio, **characterised in that** the at least one induction machine is an asynchronous motor with at least two cages, or an asynchronous motor with deep slots and **in that** an induction regulator (60) powered by a network with fixed voltage and variable frequency is used, and the quasi-static position of the rotor is slaved to the ratio of the voltage to the frequency.

5. Aircraft comprising a device according to any of claims 1 to 3.

6. Aircraft comprising a device capable of using the method according to any one of claim 4.
